# EUROPÄISCHE PATENTSCHRIFT

(11) **EP 1 794 665 B1**
(45) Veröffentlichungstag und Bekanntmachung des Hinweises auf die Patenterteilung: **19.03.2008**
(21) Anmeldenummer: 04766866.0
(22) Anmeldetag: 29.09.2004
(51) Int. Cl.: G06F 3/00, G06K 19/07, H04M 1/247, H04M 1/725, H04M 3/54

(54) **VERFAHREN UND SYSTEM ZUR EINGABE VON BENUTZERBEFEHLEN EINER BENUTZERSTEUERBAREN TELEKOMMUNIKATIONSVORRICHTUNG**
METHOD AND SYSTEM FOR INPUTTING USER INSTRUCTIONS OF A USER CONTROLLABLE TELECOMMUNICATIONS DEVICE
PROCEDE ET SYSTEME D'ENTREE D'INSTRUCTIONS D'UTILISATEUR D'UN DISPOSITIF DE TELECOMMUNICATION COMMANDE PAR L'UTILISATEUR

(43) Veröffentlichungstag der Anmeldung: 13.06.2007
(73) Patentinhaber: Swisscom Mobile AG, 3050 Bern (CH)
(72) Erfinder: LAUPER, Eric, CH-3014 Bern (CH); BUSCH LAUPER, Karin, CH-3014 Bern (CH)
(74) Vertreter: BOVARD AG
(86) Internationale Anmeldenummer: PCT/EP2004/052358
(87) Internationale Veröffentlichungsnummer: WO 2006/034732

(56) Entgegenhaltungen:
- EP-A- 0 762 715
- US-A1- 2004 002 305
- PATENT ABSTRACTS OF JAPAN Bd. 004, Nr. 024 (E-173), 29. Februar 1980 (1980-02-29) & JP 54 161807 A (NIPPON TELEGR & TELEPH CORP <NTT>), 21. Dezember 1979 (1979-12-21)

## Beschreibung

### Technisches Gebiet

Die vorliegende Erfindung betrifft ein Verfahren, ein System und eine Vorrichtung zur Eingabe von Benutzerbefehlen einer benutzersteuerbaren Telekommunikationsvorrichtung, wobei ein RFID-Transponder in den Wirkungsbereich eines RFID-Transceivers gebracht wird und wobei RFID-Identifikationsdaten des RFID-Transponders an den RFID-Transceiver übertragen werden.

### Stand der Technik

In den letzten Jahren ist die Zahl der Benutzer von Telekommunikationsvorrichtungen rasant gestiegen. Inzwischen verfügen viele Personen über eine grosse Vielzahl unterschiedlicher Telekommunikationsgeräte wie beispielsweise Festnetzendgeräte zu Hause oder im Geschäft welche über ein Festnetz angeschlossen sind oder über Mobilfunkendgeräte welche über ein Mobilfunknetzwerk verwendbar sind. Telekommunikationsvorrichtungen lassen sich entsprechend vom Benutzer gewählten Benutzerbefehlen steuern. Ein Benutzerbefehl zur Steuerung einer Telekommunikationsvorrichtung bewirkt beispielsweise eine benutzerspezifische Konfiguration eines Telekommunikationsendgeräts und/oder einer Zentraleinheit eines Telekommunikationsnetzwerks. Ein Benutzer eines festinstallierten Telefons kann durch die Eingabe eines Benutzerbefehls beispielsweise eine Zentraleinheit eines Telekommunikationsnetzwerks so steuern, dass Anrufe an dieses festinstallierte Telefon an ein Mobilfunkendgerät des Benutzers umgeleitet werden. Der Benutzer kann diesen Benutzerbefehl beispielsweise beim Verlassen des Arbeitsplatzes für das am Arbeitsplatz festinstallierte Geschäftstelefon eingeben und bleibt dann über sein Mobilfunktelefon für Anrufe an die Geschäftstelefonnummer weiterhin erreichbar. Ein Benutzerbefehl kann sich aber beispielsweise auch auf die Deaktivierung einer ersten SIM-Karte (Subscriber Identity Module) eines ersten Mobilfunkendgeräts und die anschliessende Aktivierung einer zweiten SIM-Karte eines zweiten Mobilfunkendgeräts beziehen oder auf die Aktivierung derjenigen SIM-Karte, welche für ankommende Anrufe bestimmt ist, beziehen. Ein Benutzer der ein erstes Mobilfunkendgerät mit Merkmalen welche für geschäftliche Zwecke besonders geeignet sind und ein zweites Mobilfunkgerät mit Merkmalen welche für Freizeitaktivitäten besonders geeignet sind besitzt, kann durch die Eingabe eines Benutzerbefehls zur Steuerung einer Telekommunikationsvorrichtung wie in diesem Fall beispielsweise eines Home Location Registers die Aktivierung seines gerade bevorzugten Mobilfunkgeräts auslösen. Die Eingabe von Benutzerbefehlen erfolgt im Stand der Technik über die Tastatur eines Telekommunikationsendgeräts durch Drücken einer Tastenkombination oder einer Tastenfolge. Dabei kann der Benutzer beispielsweise mittels eines an der Telekommunikationsvorrichtung angebrachten Displays sowie einer menubasierten Anzeige und Auswahl von Benutzerbefehlen geeignet unterstützt werden. Oft bezieht sich die Eingabe eines Benutzerbefehls auf immer denselben Steuerungsvorgang einer Telekommunikationsvorrichtung. Ein Benutzer der beispielsweise am Abend beim Verlassen seines Büros eine Anrufumleitung aktiviert und am Morgen beim Betreten des Büros diese Anrufumleitung wieder deaktiviert, wird deshalb täglich dieselben Tastenkombinationen und/oder Tastenfolgen ausführen. Dabei ist oft auch eine Verfolgung der Anzeigen einer menubasierten Anzeigevorrichtung notwendig.

Aus der Patentschrift US 6,446,127 B1 ist beispielsweise ein Verfahren bekannt, bei dem ein Benutzer eines Personal Information Device (PID) Daten an eine Zentraleinheit eines Telefonnetzes übermitteln kann, wobei aufgrund dieser Daten eine Rufumleitung von ankommenden Anrufen aktiviert oder deaktiviert wird, wobei der PID programmierbar ist um eine Aktivierung oder Deaktivierung zu bestimmten Tageszeiten oder entsprechend Einträgen eines Kalenders auszulösen. Ein Nachteil dieses Verfahrens ist es, dass der Benutzer den Zeitpunkt der Eingabe eines Benutzerbefehls mittels der Eingabe entsprechender Zeitdaten in den PID verwalten muss, womit schon bei kleinen Änderungen des Verhaltens des Benutzers gegenüber dem im PID gespeicherten Zeitplans Anpassungseingaben notwendig sind. Ein weiterer Nachteil dieses Verfahrens ist es, dass der Benutzer unterschiedliche Benutzerbefehle weiterhin mittels einer menubasierten Eingabevorrichtung durchführen muss.

In der Patentanmeldung US 2004/0002305 wird ein System zur Ausführung von Applikationen auf einem mobilen Terminal beschrieben. Transponder mit zugeordneten Informationen werden an durch Benutzer zugängliche Standorte angebracht. Ein Transponder wird mittels eines drahtlosen Signals des mobilen Terminals aktiviert. Informationen werden vom Transponder an das mobile Terminal übertragen, wobei dadurch eine Applikation auf dem mobilen Terminal gestartet wird.

Die Patentanmeldung EP 0 762 715 beschreibt ein System zur Rufumleitung. Ein Benutzer verfügt über eine smart card, welche in einem RF jacket angebracht werden kann. Ein Telefongerät ist einem smart card reader und einem RF transceiver zugeordnet. Mittels eines Abfragesignals wird durch den RF transceiver ein Bestätigungssignal des RF jacket überprüft und es wird eine Rufumleitung zum zugeordneten Telefongerät aktiviert, solange das Bestätigungssignal überprüfbar ist.

In der Patentanmeldung JP 54161807 wird ein System zur automatischen Änderung von Funktionen eines Telefons oder einer Telefonzentrale beschrieben. Der Benutzer trägt einen Transmitter zur Übertragung von elektromagnetischen Wellen oder von Ultraschallwellen. Ein Empfänger teilt der Telefonzentrale mit, dass der Benutzer in der Nähe eines Telefonapparats ist. Danach wird Eingehendes/Ausgehendes, welches den Benutzer betrifft, mittels eines Kontrollers oder der Telefonzentrale gesteuert.

Im Stand der Technik hat sich in den letzten Jahren die so genannte RFID (Radio Frequency identification) Technologie weiterentwickelt. Die RFID Technologie umfasst im Wesentlichen einen RFID-Transceiver zur Erfassung von RFID-Daten eines RFID-Transponders (TRANSmitt/resPOND). RFID-Transponder werden im Stand der Technik auch als RFID-Tags bezeichnet. RFID-Daten können nur gerade 1 bit umfassen, beispielsweise zur Diebstahlkontrolle am Ausgang eines Warenhauses. Für eine solche Diebstahlkontrolle werden RFID-Transponder an zu überwachenden Artikeln angebracht. Am Ausgang des Geschäfts wird mittels eines RFID-Transceivers überprüft, ob ein solcher RFID-Transponder detektierbar ist, wobei RFID-Transponder bei einer korrekten Bezahlung des Artikels vom Artikel entfernt oder deaktiviert werden. RFID-Daten können aber beispielsweise auch mehrere 100 kByte umfassen, beispielsweise zur Dokumentation von Herstellungsschritten und Prüfergebnissen eines industriellen Werkstückes. Eine solche Dokumentation hat beispielsweise den Vorteil, dass Herstellungsschritte optimal an vorhergehende Herstellungsschritte anpassbar sind. RFID-Transponder können einerseits so ausgeführt sein, dass RFID-Daten nur ausgelesen werden können. RFID-Transponder können andererseits so ausgeführt sein, dass RFID-Daten sowohl ausgelesen als auch auf den RFID-Transponder geschrieben werden können. Das Wirkungsprinzip der RFID Technologie beruht auf der kapazitiven oder induktiven Einkopplung und Auskopplung von elektromagnetischen Wellen, wobei die Distanz zwischen dem RFID-Transponder und dem RFID-Transceiver wenige Zentimeter bis beispielsweise dreissig Meter betragen kann. Aktive RFID-Transponder verfügen über eine eigene Energiequelle, beispielsweise eine Batterie. Passive RFID-Transponder verfügen über keine eigene Energiequelle. Bei der Verwendung eines passiven RFID-Transponders kann beispielsweise Energie für die Aktivierung der Elektronik des RFID-Transponders induktiv eingekoppelt werden und beispielsweise zur Aufladung eines Kondensators verwendet werden. Sobald dieser Kondensator über genügend Energie verfügt, kann beispielsweise von der Steuerelektronik des RFID-Transponders die Auskopplung von RFID-Daten ausgelöst werden. Die Auskopplung erfolgt durch das Aussenden von beispielsweise geeignet modulierten elektromagnetischen Wellen.

### Offenbarung der Erfindung

Es ist eine Aufgabe der vorliegenden Erfindung, ein neues Verfahren und ein neues System zur Eingabe von Benutzerbefehlen vorzuschlagen, welche die Nachteile des Standes der Technik nicht haben.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur Eingabe von Benutzerbefehlen einer benutzersteuerbaren Telekommunikationsvorrichtung ein RFID-Transponder in den Wirkungsbereich eines RFID-Transceivers gebracht wird, wobei RFID-Identifikationsdaten des RFID-Transponders an den RFID-Transceiver übertragen werden. Die RFID-Identifikationsdaten und/oder eine Identifikation des RFID-Transceivers werden vom RFID-Transceiver an ein Erfassungsmodul übertragen, wobei mittels des Erfassungsmoduls sowie mittels vom Erfassungsmodul zugreifbarer Tabellen mit RFID-Identifikationsdaten und/oder Tabellen mit Identifikationen von RFID-Transceivern ein zugeordneter Benutzerbefehl selektiert wird, und wobei mittels des Erfassungsmoduls die benutzersteuerbare Telekommunikationsvorrichtung entsprechend dem selektierten Benutzerbefehl gesteuert wird. Ein solches Verfahren hat insbesondere den Vorteil, dass der Benutzer einen Benutzerbefehl schnell und bequem auslösen kann. Da RFID-Transponder sehr klein und sehr kostengünstig herstellbar sind, kann der Benutzer beispielsweise verschiedene RFID-Transponder mitführen und den gewünschten Benutzerbefehl dadurch auslösen, dass der entsprechende RFID-Transponder in den Wirkungsbereich des RFID-Transceivers gebracht wird.

Erfindungsgemäss werden RFID-Identifikationsdaten sowie die Identifikation des RFID-Transceivers mittels eines mit dem RFID-Transceiver und einem Telekommunikationsnetzwerk verbindbaren Verbindungsmoduls über das Telekommunikationsnetzwerk an ein mit dem Telekommunikationsnetzwerk verbindbares Erfassungsmodul übertragen. Ein solches Verfahren hat insbesondere den Vorteil, dass ein bestehendes Telekommunikationsnetzwerk sehr einfach mit der zur Durchführung des erfindungsgemässen Verfahrens notwendigen Vorrichtungen ergänzt werden kann. Das erfindungsgemässe Verfahren hat zudem den Vorteil, dass die Eingabe eines Benutzerbefehls sehr einfach ist. Das Verfahren ist insbesondere für ältere Personen und/oder Sehbehinderte und/oder Personen die an motorischen (Multiple Sklerose) oder anderen Krankheiten (Alzheimer) leiden, geeignet. Diese Personen sind nicht in der Lage, komplexe Benutzerbefehle auf ein Terminal einzugeben, können aber jedoch mittels entsprechender grossräumigen Bewegungen einen RFID-Transponder mit einem RFID-Transceiver interagieren lassen.

In einer Ausführungsvariante werden RFID-Identifikationsdaten sowie die Identifikation des RFID-Transceivers an ein in die benutzersteuerbare Telekommunikationsvorrichtung integrierbares Erfassungsmodul übertragen. Ein solches Verfahren hat insbesondere den Vorteil, dass das Erfassungsmodul beispielsweise als Softwaremodul ausführbar ist und somit bestehende Telekommunikationsvorrichtungen sehr einfach mit der zur Durchführung des erfindungsgemässen Verfahrens notwendigen Vorrichtungen ergänzt werden kann.

In einer weiteren Ausführungsvariante bezieht sich der Benutzerbefehl auf die Aktivierung oder Deaktivierung einer Anrufumleitung von für ein erstes Telekommunikationsgerät bestimmten Anrufen auf ein zweites Telekommunikationsgerät. Ein solches Verfahren hat den Vorteil, dass ein Benutzer sehr bequem den Benutzerbefehl zur Auslösung der Anrufumleitung auslösen kann, beispielsweise mittels eines beliebigen Verbindungsmoduls.

In einer weiteren Ausführungsvariante bezieht sich der Benutzerbefehl auf die Selektion eines Benutzerprofils eines Telekommunikationsendgeräts. Ein solches Verfahren hat den Vorteil, dass ein Benutzer ein Telekommunikationsendgerät sehr bequem mit einem persönlichen Benutzerprofil laden kann. Das Benutzerprofil und die zugelassenen Benutzerbefehle können in einer ersten Phase beispielsweise über Internet beispielsweise mittels eines PCs verwaltet werden. In einer anschliessenden Phase können die entsprechenden Benutzerbefehle mittels RFID-Transponder nach dem erfindungsgemässen Verfahren ausgelöst werden. Im Benutzerprofil gehören Angaben über Sprachen, Geschlecht, Standort usw. des Benutzers, die beispielsweise als Filter für gewisse Dienste eingesetzt werden können.

In einer weiteren Ausführungsvariante bezieht sich der Benutzerbefehl auf eine Zahlungsauslösung in einem Zahlungstransaktionsverfahren. Ein solches Verfahren hat den Vorteil, dass ein Benutzer eine Zahlung sehr bequem auslösen kann. Somit können beispielsweise Dateninhalte gekauft werden, die über ein Telekommunikationsnetz als Objekt (MP3-Datei) oder als Datenstream (TV-Sendung) abgespielt werden können.

In einer weiteren Ausführungsvariante bezieht sich der Benutzerbefehl auf die Deaktivierung eines ersten SIM-Moduls eines ersten Mobilfunkendgeräts und die Aktivierung eines zweiten SIM-Moduls eines zweiten Mobilfunkendgeräts. Ein solches Verfahren hat den Vorteil, dass ein Benutzer sehr bequem zwischen der Verwendung von zwei Mobilfunkendgeräten umschalten kann.

In einer weiteren Ausführungsvariante bezieht sich die benutzersteuerbare Telekommunikationsvorrichtung auf eine Zentrale eines Festnetzwerks oder auf ein Home Location Register eines Mobilfunknetzwerks oder auf ein Visiting Location Register oder auf irgendein anderes ähnliches Register eines Mobilfunknetzwerks. Ein solches Verfahren hat den Vorteil, dass Änderungen in einem solchen Register an beliebigen Standorten vorgenommen werden können.

In einer weiteren Ausführungsvariante bezieht sich das Telekommunikationsnetzwerk auf ein Mobilfunknetzwerk und/oder ein Festnetzwerk und/oder ein Internet-basiertes Netzwerk und/oder ein Wireless Local Area Network (WLAN) und/oder ein Power Line Communication (PLC) Netzwerk und/oder ein kabelbasiertes Netzwerk. Ein solches Verfahren hat den Vorteil, dass eine grosse Interoperabilität zwischen den verschiedenen Telekommunikationsnetzwerken sichergestellt wird. Beispielsweise können Parameter wie beispielsweise benutzerbezogene Parameter für den Benutzer eines Mobilfunknetzes über ein PLC-Netzwerk geändert werden und zwar unabhängig von der Übertragungsqualität des Mobilfunknetzes oder sogar in Abwesenheit von der Abdeckung eines Standorts durch das Mobilfunknetz oder in Abwesenheit eines Roaming-Abkommens.

In einer weiteren Ausführungsvariante ist der RFID-Transceiver an einem Telekommunikationsendgerät angebracht, wobei der RFID-Identifikationsdaten und die Identifikation des RFID-Transceivers zusammen mit Daten des Telekommunikationsendgeräts an das Erfassungsmodul übertragen werden und wobei das Erfassungsmodul mittels entsprechender Tabellen mit RFID-Identifikationsdaten und Identifikationen von RFID-Transceivem sowie einer entsprechenden Tabelle mit Daten von Telekommunikationsendgeräten einen zugeordneten Benutzerbefehl selektiert. Ein solches Verfahren hat den Vorteil, dass die Sicherheit bei der Eingabe eines Benutzerbefehls erhöht wird.

An dieser Stelle soll festgehalten werden, dass sich die vorliegende Erfindung neben dem erfindungsgemässen Verfahren auch auf ein System zur Ausführung dieses Verfahrens bezieht.

### Kurze Beschreibung der Zeichnung

Nachfolgend werden Ausführungsvarianten der vorliegenden Erfindung anhand von Beispielen beschrieben; die Beispiele der Ausführungen werden durch folgende beigelegte Figur illustriert:

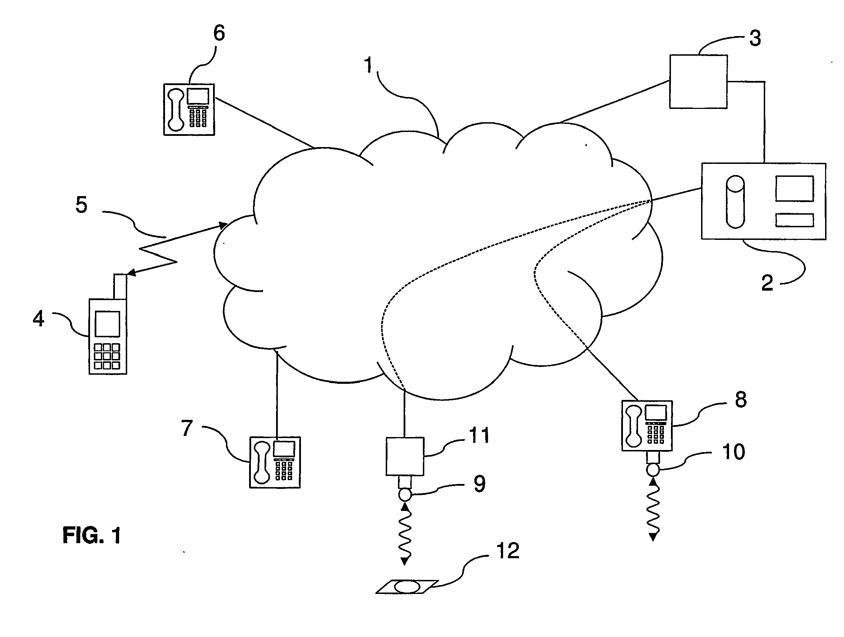

Figur 1 zeigt ein Blockdiagramm, welches schematisch ein Verfahren und ein System zur Eingabe von Benutzerbefehlen, wobei ein RFID-Transponder 12 beispielsweise in den Wirkungsbereich eines RFID-Transceivers 9 gebracht wird.

### Ausführungsform(en) der Erfindung

In Figur 1 bezieht sich das Bezugszeichen 1 auf ein Telekommunikationsnetzwerk. Das Telekommunikationsnetzwerk 1 kann irgendein Netzwerk zur Erstellung von Kommunikationsverbindungen zwischen Netzwerkgeräten sein, beispielsweise ein PSTN (Public Switched Telephone Network) Netzwerk, ein Mobilfunknetzwerk, beispielsweise ein GSM (Global System for Mobile communication) Netzwerk, ein UMTS (Universal Mobile Telecommunications Service) Netzwerk oder irgendein anderes Mobilfunknetzwerk, ein Internet-basiertes Netzwerk wie ein Wireless Lokal Area Network (WLAN) oder ein Power Line Communication (PLC) Netzwerk oder ein kabelbasiertes Netzwerk (Cable TV) oder irgendein anderes Telekommunikationsnetzwerk zur Verbindung von entfernten Netzwerkgeräten. Das Telekommunikationsnetzwerk 1 kann auch mehrere verschiedene Netzwerke umfassen, welche über ein geeignetes Netzwerk-Verbindungsmodul verbindbar sind. Das Telekommunikationsnetzwerk 1 kann beispielsweise ein PSTN Netzwerk und ein Mobilfunknetzwerk sowie ein geeignetes Netzwerk-Verbindungsmodul umfassen, sodass Netzwerkgeräte des Mobilfunknetzwerks mit Netzwerkgeräten des PSTN Netzwerks verbindbar sind.

In Figur 1 bezieht sich das Bezugszeichen 2 auf ein erfindungsgemässes Erfassungsmodul. Das Erfassungsmodul 2 umfasst Vorrichtungen zur Abspeicherung von RFID-Identifikationsdaten und Identifikationen von RFID-Transceivern sowie Vorrichtungen zur Selektion eines Benutzerbefehls sowie zur Steuerung einer benutzersteuerbaren Telekommunikationsvorrichtung gemäss dem selektierten Benutzerbefehl. Das Erfassungsmodul 2 ist vorzugsweise als ein auf einem geeigneten Computer ablaufendes programmiertes Softwaremodul ausgeführt. Der Fachmann wird verstehen, dass das Erfassungsmodul auch teilweise oder vollständig hardwaremässig ausgeführt werden kann. Der Fachmann wird zudem verstehen, dass das Erfassungsmodul 2 auch aus verteilten Vorrichtungen aufgebaut sein kann, wobei diese verteilten Vorrichtungen, wie beispielsweise eine Vorrichtung zur Abspeicherung einer Tabelle und eine Vorrichtung zur Selektion eines Benutzerbefehls, beispielsweise über das Telekommunikationsnetzwerk 1 geeignet verbindbar sind. Ein Erfassungsmodul 2 kann beispielsweise gleichzeitig mit unterschiedlichen benutzersteuerbaren Telekommunikationsvorrichtungen 3 angeschlossen sein und somit beispielsweise von einem unabhängigen Betreiber betrieben werden.

In Figur 1 bezieht sich das Bezugszeichen 3 auf eine benutzersteuerbare Telekommunikationsvorrichtung. Die benutzersteuerbare Telekommunikationsvorrichtung 3 ist beispielsweise eine Zentraleinheit eines Festnetzes oder ein Home Location Register eines Mobilfunknetzes oder ein Visiting Location Register oder irgendein ähnliches Register eines Mobilfunknetzes oder irgendeine andere benutzersteuerbare Telekommunikationsvorrichtung. Das Erfassungsmodul 2 ist über irgendeine geeignete Verbindung, beispielsweise über ein Ethernet-Kabel oder über ein privates Netzwerk oder über das Telekommunikationsnetzwerk 1 oder über irgendeine andere geeignete Verbindung, mit der benutzergesteuerten Telekommunikationsvorrichtung 3 verbindbar, wobei die benutzergesteuerte Telekommunikationsvorrichtung 3 über die genannte Verbindung durch das Erfassungsmodul 2 steuerbar ist. Die benutzergesteuerte Telekommunikationsvorrichtung ist zudem mit dem Telekommunikationsnetzwerk 1 verbindbar, wobei über diese genannte Verbindung Dienste und Funktionen der benutzersteuerbaren Telekommunikationsvorrichtung 3, wie beispielsweise ein Dienst zur Anrufumleitung oder ein Dienst zur Lokalisierung einer SIM-Karte, gegenüber dem Telekommunikationsnetzwerk 1 sowie gegenüber an dieses Telekommunikationsnetzwerk 1 anschliessbaren Telekommunikationsendgeräten anbietbar sind.

In Figur 1 bezieht sich das Bezugszeichen 4 auf ein über eine Mobilfunkverbindung 5 mit dem Telekommunikationsnetzwerk 1 verbindbares Mobilfunkendgerät, beispielsweise auf ein GSM (Global System for Mobile communications) Mobilfunkendgerät, auf ein UMTS (Universal Mobile Telecommunications Service) Mobilfunkendgerät oder auf irgendein anderes mit dem Telekommunikationsnetzwerk 1 verbindbares Mobilfunkendgerät. Die Bezugszeichen 6, 7, und 8 beziehen sich auf verschiedene über eine Festnetzverbindung verbindbare Festnetzendgeräte, beispielsweise auf ein analoges Festnetztelefon, ein ISDN (Integrated Services Digital Network) Festnetztelefon, ein VolP (Voice over IP) Telefon oder auf irgendein anderes mit dem Telekommunikationsnetzwerk 1 verbindbares Festnetzendgerät. Weitere Endgeräte können beispielsweise TV-Geräte, Radio Empfänger oder Retinal Scanning Displays (RSD) sein, welche an einem Telekommunikationsnetz angeschlossen sind und welche beispielsweise über keine Tastatur oder ähnliche Eingabevorrichtung verfügen. Somit kann beispielsweise die Wahl der Filmsprache mittels des erfindungsgemässen Verfahren und eines entsprechenden RFID-Transponders eingegeben werden.

In Figur 1 beziehen sich die Bezugszeichen 9 und 10 auf zwei beispielhafte Anordnungen von RFID-Transceivem. Beispielsweise ist der RFID-Transceiver 9 über ein Verbindungsmodul 11 mit dem Telekommunikationsnetzwerk 1 verbindbar. Weiter ist beispielsweise der RFID-Transceiver 10 am Festnetzendgerät 8 angebracht. Für die Ausführung des erfindungsgemässen Verfahrens kann für ein RFID-Transceiver irgendeine geeignete Anordnung gewählt werden, wobei RFID-Identifikationsdaten und eine Identifikation des RFID-Transceivers über irgendeine Verbindung an das Erfassungsmodul 2 übertragen werden. So lässt sich ein RFID-Transceiver beispielsweise auch mit einem Kabelnetzwerkdose zur Übertragung von Fernsehsignalen und zur Übertragung von Internet Datenpaketen verbinden, wobei RFID-Identifikationsdaten und eine Identifikation des RFID-Transceivers beispielsweise über eine geeignete Internet-Verbindung an das Erfassungsmodul 2 übermittelt werden. Weiter lässt sich ein RFID-Transceiver mit einer Stromsteckdose verbinden, wobei RFID-Identifikationsdaten und eine Identifikation des RFID-Transceivers über eine Power-Line basierte Internetverbindung an das Erfassungsmodul 2 über tragen werden.

In Figur 1 bezieht sich das Bezugszeichen 12 auf einen RFID-Transponder. Der RFID-Transponder 12 kann beispielsweise in einer Plastikkarte, beispielsweise im Kreditkartenformat, angebracht sein, wobei ein Benutzer mehrere dieser Plastikkarten mit je einem anderen RFID-Transponder bequem bei sich tragen kann, und wobei jede dieser Plastikkarten beispielsweise durch die Verwendung einer geeigneten Farbe oder eine geeignete Aufschrift für den Benutzer leicht identifizierbar ausgestaltbar ist. Ein RFID-Transponder 12 kann aber auch an oder in einem täglichen Gebrauchsartikel eines Benutzers wie beispielsweise einer Uhr, einem Schlüsselbund, einem Mobilfunkgerät oder einem persönlichen Kugelschreiber des Benutzers angebracht sein. Ein RFID-Transponder 12 ist grundsätzlich für eine Verwendung auf allen Telekommunikationsnetzen geeignet.

Herausgeber der RFID-Transponder 12 können beispielsweise die Betreiber des Telekommunikationsnetzes 1, beispielsweise die Mobilfunknetzoperatoren, die RFID-Identifikationsdaten oder Codes in die RFID-Transponder 12 fest einprogrammieren oder abspeichern.

In einer Ausführungsvariante werden die RFID-Transponder 12 mit RFID-Identifikationsdaten oder einem eindeutigen Code programmiert, der einer Identität, beispielsweise mit der MSISDN- oder IMSI-Nummer eines Mobilfunknetzbenutzers zugeordnet sein kann. In einer anderen Variante werden mehrere RFID-Transponder 12 mit denselben RFID-Identifikationsdaten oder demselben Code programmiert. Somit können beispielsweise benutzerspezifische, gerätespezifische oder allgemeingültige Benutzerbefehle angefertigt werden.

Die Vermittler der Dateninhalte können ebenfalls RFID-Transponder 12 für die Bezahlung der zu übertragenden Dateninhalte herausgeben. Im Falle von einer Zahlung mittels RFID-Transponder 12 kann der entsprechende Betrag auf einem mit dem RFID-Transponder 12 verbundenen Konto belastet werden. Dieses Konto kann beispielsweise ein Prepaid-Konto, ein Debit-Konto oder ein Postpaid-Konto sein.

Für die Eingabe eines Benutzerbefehls wählt ein Benutzer einen gewünschten RFID-Transponder 12 und bringt diesen in den Wirkungsbereich eines gewünschten RFID-Transceivers 9, 10. Sobald der entsprechende RFID-Transceiver 9, 10 den RFID-Transponder 12 detektiert, übermittelt der RFID-Transceiver 9, 10 über eine Verbindung zwischen dem RFID-Transponder und dem Erfassungsmodul 2 RFID-Identifikationsdaten des RFID-Transponders und eine Identifikation des RFID-Transceivers an das Erfassungsmodul 2. Das Erfassungsmodul wertet anschliessend die RFID-Identifikationsdaten und die Identifikation des RFID-Transceivers aus und selektiert gemäss Tabellen von RFID-Identifikationsdaten und Identifikationen von RFID-Transceivem einen Benutzerbefehl. Folgende Tabelle veranschaulicht eine solche Selektion eines Benutzerbefehls für das Beispiel einer Rufumleitung:

| RFID-Transponder | RFID-Transceiver | Selektierter Benutzerbefehl |
|---|---|---|
| 12 | 9 | Rufumleitung auf Mobilfunkgerät 4 aktivieren |
| 13 (nicht gezeichnet) | 9 | Rufumleitung auf Mobilfunkgerät 4 deaktivieren |
| 12 | 10 | Rufumleitung auf Festnetzgerät 8 aktivieren |

Die erfindungsgemässe Lösung lässt sich in einer grossen Vielzahl von Anwendungsmöglichkeiten variieren. Beispielsweise kann ein RFID-Transceiver in einem in eine Stromsteckdose einsteckbarem Stecker angebracht sein. Neben dem RFID-Transceiver umfasst der Stecker beispielsweise ein Verbindungsmodul 11 zur Verbindung des RFID-Transceivers mit einem Erfassungsmodul 2 sowie beispielsweise elektronische Schlüssel und/oder Zertifikate zur Sicherung einer nachfolgend beschriebenen Datenverbindung zwischen dem Verbindungsmodul 11 und dem Erfassungsmodul 2. Das Verbindungsmodul 11 kann beispielsweise eine Internet Protokoll Schnittstelle sowie eine Schnittstelle zur Übertragung von Ethernet Datenpaketen über das Stromkabel umfassen. Beispielsweise über ein ebenfalls mittels eines mit einer Stromsteckdose und einer Schnittstelle zur Übertragung von Ethernet Datenpaketen über das Stromkabel ausgerüstetes ADSL Modem sowie über eine entsprechende Internet Protokoll Schnittstelle des Erfassungsmoduls 2 sowie entsprechender Schlüssel und/oder Zertifikate des Erfassungsmoduls 2 kann eine gesicherte Internet Protokoll basierte Verbindung zwischen dem Verbindungsmodul 11 und dem Erfassungsmodul 2 aufgebaut werden. Der Stecker mit dem RFID-Transceiver lässt sich nun an einer geeigneten Stelle, beispielsweise bei einem Eingang zu einem Büro, platzieren. Der Benutzer des Büros kann nun einen seiner persönlichen Gebrauchsartikel, beispielsweise seine Uhr, mit einem RFID-Transponder ausrüsten, wobei mittels des Verbindungsmoduls 11 RFID-Identifikationsdaten und eine Identifikation des RFID-Transceivers an das Erfassungsmodul 2 übermittelt werden sobald der Benutzer den Wirkungsbereich des RFID-Transceivers betritt. Erfindungsgemäss wird damit die benutzersteuerbare Telekommunikationsvorrichtung 3 entsprechend einem den RFID-Identifikationsdaten und der Identifikation des RFID-Transceivers zugeordneten Benutzerbefehls gesteuert. Der Wirkungsbereich des RFID-Transceivers kann beispielsweise so ausgestaltet sein, dass dieser die gesamte Fläche des Büros des Benutzers abdeckt und der Benutzerbefehl kann beispielsweise die Deaktivierung einer Anrufumleitung von Anrufen auf die Telefonnummer eines im Büro des Benutzers installierten Festnetztelefons umfassen. Das Verbindungsmodul 11 kann beispielsweise Mittel umfassen, dass der RFID-Transceiver zu bestimmbaren Zeitpunkten aufgefordert wird die RFID-Identifikationsdaten des RFID-Transponders zu überprüfen, wobei das Verbindungsmodul 11 bei einer erfolgreichen Überprüfung die RFID-Identifikationsdaten sowie die Identifikation des RFID-Transceivers erneut an das Erfassungsmodul 2 übermittelt. Das Erfassungsmodul 2 kann beispielsweise ein Gültigkeitsmodul umfassen, wobei durch das Gültigkeitsmodul beispielsweise die Gültigkeitsdauer eines Benutzerbefehls sowie ein zweiter Benutzerbefehl festgelegt wird, welcher zweite Benutzerbefehl nach Ablauf der Gültigkeitsdauer des Benutzerbefehls zur Steuerung der benutzersteuerbaren Telekommunikationsvorrichtung 3 verwendet wird.

In einem weiteren Beispiel einer Anwendungsmöglichkeit des erfindungsgemässen Verfahrens bezieht sich die benutzersteuerbare Telekommunikationsvorrichtung 3 auf eine betriebsinterne Hauszentrale eines Betriebes. Das Erfassungsmodul 2 ist beispielsweise in dieser Hauszentrale angeordnet und RFID-Transceiver sind beispielsweise an den von der Hauszentrale verwalteten Telefongeräten angeordnet. Sobald ein Benutzer beispielsweise eine Plastikkarte mit einem RFID-Transponder in den Wirkungsbereich eines RFID-Transceivers legt, werden RFID-Identifikationsdaten und eine Identifikation des RFID-Transceivers mittels einem Verbindungsmodul 11 an das Erfassungsmodul 2 übermittelt, wobei das Erfassungsmodul mit einem entsprechenden Benutzerbefehl die Hauszentrale so steuert, dass beispielsweise ein dem RFID-Transponder zugeordnetes Benutzerprofil von der Hauszentrale auf das entsprechende Telefongerät geladen wird. Mittels weiterer Plastikkarten mit RFID-Transpondem kann der Benutzer beispielsweise auch festlegen, dass er zur Zeit nicht gestört werden möchte, wobei Anrufe beispielsweise von der Hauszentrale mit einer entsprechenden automatischen Meldung beantwortet werden oder wobei Anrufe an eine definierbare Umleitungsnummer weitergeleitet werden.

In einem weiteren Beispiel einer Anwendungsmöglichkeit des erfindungsgemässen Verfahrens bezieht sich die benutzersteuerbare Telekommunikationsvorrichtung auf eine Zentraleinheit eines Zahlungstransaktionsverfahrens. Ein RFID-Transceiver ist beispielsweise an der Kasse eines Geschäfts angebracht. Ein Kunde des Geschäfts kann beispielsweise zur Bezahlung von Einkäufen einen RFID-Transponder in den Wirkungsbereich des RFID-Transceivers bringen, wobei RFID-Identifikationsdaten und eine Identifikation des RFID-Transceivers an ein Erfassungsmodul 2 übermittelt werden. Dem Erfassungsmodul 2 stehen damit genügend Informationen zur Verfügung, um die Zentraleinheit des Zahlungstransaktionsverfahrens mittels eines Benutzerbefehls so zu steuern, dass eine entsprechende Zahlungstransaktion auslösbar ist. Um dieses Verfahren abzusichern, lässt sich zusätzlich eine einer Kasse oder einem RFID-Transceiver zugeordnete Eingabeeinheit zur Eingabe eines persönlichen Geheimnisses anbringen, wobei dieses persönliche Geheimnis zur Verifizierung beispielsweise an das Erfassungsmodul 2 übermittelbar ist.

In einem weiteren Beispiel einer Anwendungsmöglichkeit des erfindungsgemässen Verfahrens bezieht sich der RFID-Transceiver auf eine tragbare Vorrichtung, die mittels eines Verbindungsmoduls 11 beispielsweise mit einem WLAN-Hotspot eines Telekommunikationsnetzes über eine drahtlose Schnittstelle verbindbar ist. Weiter beziehen sich die RFID-Transponder 12 auf kleine Module welche in das Gehäuse des RFID-Transceivers einsetzbar sind. Das Gehäuse des RFID-Transceivers und die RFID-Transponder sind so gestaltet, dass das Schieben eines der RFID-Transponder im Gehäuse des RFID-Transceiver den entsprechenden Benutzerbefehl auslöst. Dies hat den Vorteil, dass die ganze Vorrichtung als eine einzige mobile und tragbare Einheit ist, und dass die RFID-Transponder nicht verloren gehen.

## Patentansprüche

1. Verfahren zur Eingabe von Benutzerbefehlen einer benutzersteuerbaren Telekommunikationsvorrichtung (3), wobei ein RFID-Transponder (12) in den Wirkungsbereich eines RFID-Transceivers (9,10) gebracht wird, und wobei RFID-Identifikationsdaten des RFID-Transponders (12) an den RFID-Transceiver (9,10) übertragen werden, wobei
RFID-Identifikationsdaten und/oder eine Identifikation des RFID-Transceivers vom RFID-Transceiver (9,10) an ein Erfassungsmodul (2) übertragen werden, wobei RFID-Identifikationsdaten und/oder die Identifikation des RFID-Transceivers mittels eines mit dem RFID-Transceiver (9,10) und einem Telekommunikationsnetzwerk (1) verbindbaren Verbindungsmoduls (11) über das Telekommunikationsnetzwerk (1) an ein mit dem Telekommunikationsnetzwerk (1) verbindbares Erfassungsmodul (2) übertragen werden,
mittels des Erfassungsmoduls (2) sowie mittels vom Erfassungsmodul zugreifbarer Tabellen mit RFID-Identifikationsdaten und/oder Tabellen mit Identifikationen von RFID-Transceivern ein zugeordneter Benutzerbefehl selektiert wird, **dadurch gekennzeichnet,**
**dass** mittels des Erfassungsmoduls (2) die benutzersteuerbare Telekommunikationsvorrichtung (3) entsprechend dem selektierten Benutzerbefehl gesteuert wird.

2. Verfahren nach Anspruch 1, **dadurch gekennzeichnet, dass** RFID-Identifikationsdaten sowie die Identifikation des RFID-Transceivers an ein in die benutzersteuerbare Telekommunikationsvorrichtung (3) integrierbares Erfassungsmodul (2) übertragen werden.

3. Verfahren nach einem der Ansprüche 1 bis 2, **dadurch gekennzeichnet, dass** sich der Benutzerbefehl auf die Aktivierung oder Deaktivierung einer Anrufumleitung von für ein erstes Telekommunikationsgerät (4,6,7,8) bestimmten Anrufen auf ein zweites Telekommunikationsgerät (4,6,7,8) bezieht.

4. Verfahren nach einem der Ansprüche 1 bis 3, **dadurch gekennzeichnet, dass** sich der Benutzerbefehl auf die Selektion eines Benutzerprofils eines Telekommunikationsendgeräts (4,6,7,8) bezieht.

5. Verfahren nach einem der Ansprüche 1 bis 4, **dadurch gekennzeichnet, dass** sich der Benutzerbefehl auf eine Zahlungsauslösung in einem Zahlungstransaktionsverfahren bezieht.

6. Verfahren nach einem der Ansprüche 1 bis 5, **dadurch gekennzeichnet, dass** sich der Benutzerbefehl auf die Deaktivierung eines ersten SIM-Moduls eines ersten Mobilfunkendgeräts (4) und die Aktivierung eines zweiten SIM-Moduls eines zweiten Mobilfunkendgeräts (4) und/oder dass sich der Benutzerbefehl auf die Aktivierung eines SIM-Moduls für den Empfang von Anrufen bezieht.

7. Verfahren nach einem der Ansprüche 1 bis 6, **dadurch gekennzeichnet, dass** sich die benutzersteuerbare Telekommunikationsvorrichtung (3) auf eine Zentrale eines Festnetzwerks oder auf ein Home Location Register eines Mobilfunknetzwerks oder auf ein Visiting Location Register eines Mobilfunknetzwerks bezieht.

8. Verfahren nach einem der Ansprüche 1 bis 7, **dadurch gekennzeichnet, dass** sich das Telekommunikationsnetzwerk (1) auf ein Mobilfunknetzwerk und/oder ein Festnetzwerk und/oder ein Internet-basiertes Netzwerk bezieht.

9. Verfahren nach einem der Ansprüche 1 bis 8, **dadurch gekennzeichnet, dass** der RFID-Transceiver (10) an einem Telekommunikationsendgerät (8) angebracht ist, dass RFID-Identifikationsdaten und die Identifikation des RFID-Transceivers zusammen mit Daten des Telekommunikationsendgeräts (8) an das Erfassungsmodul (2) übertragen werden und dass das Erfassungsmodul (2) mittels entsprechender Tabellen mit RFID-Identifikationsdaten und Identifikationen von RFID-Transceivern sowie einer entsprechenden Tabelle mit Daten von Telekommunikationsendgeräten einen zugeordneten Benutzerbefehl selektiert.

10. System zur Eingabe von Benutzerbefehlen einer benutzersteuerbaren Telekommunikationsvorrichtung (3), wobei ein RFID-Transponder (12) in den Wirkungsbereich eines RFID-Transceivers (9,10) einbringbar ist, und wobei RFID-Identifikationsdaten des RFID-Transponders (12) an den RFID-Transceiver (9,10) übertragbar sind,
wobei das System Mittel zur Übertragung von RFID-Identifikationsdaten und/oder einer Identifikation des RFID-Transceivers vom RFID-Transceiver (9,10) an ein Erfassungsmodul (2) umfasst, wobei für die Übertragung von RFID-Identifikationsdaten und/oder einer Identifikation eines RFID-Transceivers der RFID-Transceiver (9,10) mittels eines Verbindungsmoduls (11) und mittels eines Telekommunikationsnetzwerks (1) mit dem Erfassungsmodul (2) verbindbar ist,
das Erfassungsmodul (2) Mittel zum Abrufen von Daten aus Tabellen mit RFID-Identifikationsdaten und/oder Tabellen mit Identifikationen von RFID-Transceivern sowie Mittel zur Selektion eines den RFID-Identifikationsdaten und/oder der Identifikation des RFID-Transceivers zugeordneten Benutzerbefehls umfasst, **dadurch gekennzeichnet,**
**dass** das Erfassungsmodul (2) Mittel zur Steuerung einer mittels eines Benutzerbefehls benutzersteuerbaren Telekommunikationsvorrichtung (3) umfasst.

11. System nach Anspruch 10, **dadurch gekennzeichnet, dass** das Erfassungsmodul (2) in die benutzergesteuerte Telekommunikationsvorrichtung (3) integriert ist.

12. System nach einem der Ansprüche 10 bis 11, **dadurch gekennzeichnet, dass** die benutzersteuerbare Telekommunikationsvorrichtung (2) eine Vorrichtung zur Anrufumleitung von für ein erstes Telekommunikationsgerät (4,6,7,8) bestimmten Anrufen auf ein zweites Telekommunikationsgerät (4,6,7,8) umfasst.

13. System nach einem der Ansprüche 10 bis 12, **dadurch gekennzeichnet, dass** die benutzersteuerbare Telekommunikationsvorrichtung (2) eine Vorrichtung zur Selektion eines Benutzerprofils eines Telekommunikationsendgeräts (4,6,7,8) umfasst.

14. System nach einem der Ansprüche 10 bis 13, **dadurch gekennzeichnet, dass** die benutzersteuerbare Telekommunikationsvorrichtung (2) eine Vorrichtung zur Auslösung einer Zahlungstransaktion umfasst.

15. System nach einem der Ansprüche 10 bis 14, **dadurch gekennzeichnet, dass** die benutzersteuerbare Telekommunikationsvorrichtung (2) eine Vorrichtung zur Deaktivierung eines ersten SIM-Moduls eines ersten Mobilfunkendgeräts (4) sowie zur Aktivierung eines zweiten SIM-Moduls eines zweiten Mobilfunkendgeräts (4) und/oder eine Vorrichtung zur Aktivierung eines SIM-Moduls für den Empfang von Anrufen umfasst.

16. System nach einem der Ansprüche 10 bis 15, **dadurch gekennzeichnet, dass** die benutzersteuerbare Telekommunikationsvorrichtung (2) eine Zentrale eines Festnetzwerks oder auf ein Home Location Register eines Mobilfunknetzwerks oder auf ein Visiting Location Register eines Mobilfunknetzwerks umfasst.

17. System nach einem der Ansprüche 10 bis 16, **dadurch gekennzeichnet, dass** das Telekommunikationsnetzwerk (1) ein Mobilfunknetzwerk und/oder ein Festnetzwerk und/oder ein Internet-basiertes Netzwerk umfasst.

18. Erfassungsmodul (2) zur Steuerung einer benutzergesteuerten Telekommunikationsvorrichtung, **dadurch gekennzeichnet,**
**dass** das Erfassungsmodul (2) Mittel zum Empfang von RFID-Identifikationsdaten und/oder einer Identifikation von RFID-Transceivern umfasst,
**dass** das Erfassungsmodul (2) Mittel zum Abrufen von Daten aus Tabellen mit RFID-Identifikationsdaten und/oder Tabellen mit Identifikationen von RFID-Transceivern umfasst,
**dass** das Erfassungsmodul (2) Mittel zur Selektion eines den RFID-Identifikationsdaten und/oder der Identifikation eines RFID-Transceivers zugeordneten Benutzerbefehls umfasst,
**dass** das Erfassungsmodul (2) Mittel zur Steuerung einer benutzergesteuerten Telekommunikationsvorrichtung (3) mittels eines Benutzerbefehls umfasst.

## Claims

1. Method for inputting user instructions of a user-controllable telecommunication device (3), an RFID transponder (12) being brought into the sphere of operation of an RFID transceiver (9,10), and RFID identification data of the RFID transponder (12) being transmitted to the RFID transceiver (9,10),
RFID identification data and/or an identification of the RFID transceiver being transmitted to a collection module (2) by the RFID transceiver (9,10), RFID identification data and/or the identification of the RFID transceiver being transmitted via a telecommunication network (1) to a collection module (2) connectible to the telecommunications network (1), by means of a connection module (11) connectible to the RFID transceiver (9,10) and the telecommunication network (1);
an assigned user instruction being selected by means of the collection module (2) as well as by means of tables containing RFID identification data accessible to the collection module and/or tables containing RFID transceiver identifications, **characterised in**
**that** the user-controllable telecommunication device (3) is controlled in accordance with the selected user instruction by means of the collection module (2).

2. Method according to claim 1, **characterised in that** RFID identification data as well as the RFID transceiver identification are transmitted to a collection module (2) able to be integrated in the user-controllable telecommunication device (3).

3. Method according to one of the claims 1 to 2, **characterised in that** the user instruction relates to the activation or deactivation of a call forwarding feature for forwarding calls intended for a first telecommunication device (4,6,7,8) to a second telecommunication device (4,6,7,8).

4. Method according to one of the claims 1 to 3, **characterised in that** the user instruction relates to the selection of a user profile of a telecommunication terminal (4,6,7,8).

5. Method according one of the claims 1 to 4, **characterised in that** the user instruction relates to an initiation of payment in a payment transaction process.

6. Method according to one of the claims 1 to 5, **characterised in that** the user instruction relates to the deactivation of a first SIM module of a first mobile radio terminal (4) and the activation of a second SIM module of a second mobile radio terminal (4) and/or that the user instruction relates to the activation of a SIM module for receiving calls.

7. Method according to one of the claims 1 to 6, **characterised in that** the user-controllable telecommunication device (3) relates to a central unit of a fixed network or to a Home Location Register of a mobile radio network, or to a Visiting Location Register of a mobile radio network.

8. Method according to one of the claims 1 to 7, **characterised in that** the telecommunication network (1) relates to a mobile radio network and/or a fixed network and/or an Internet-based network

9. Method according to one of the claims 1 to 8, **characterised in that** the RFID transceiver (10) is installed on a telecommunication terminal (8), that RFID identification data and the RFID transceiver identification are transmitted, together with data of the telecommunication terminal (8), to the collection module (2), and that the collection module (2) selects an assigned user instruction by means of corresponding tables containing RFID identification data and RFID transceiver identifications as well as a corresponding table with data of telecommunication terminals.

10. System for inputting user instructions of a user-controllable telecommunication device (3), an RFID transponder (12) being able to be brought into the sphere of operation of an RFID transceiver (9,10), and RFID identification data of the RFID transponder (12) being able to be transmitted to the RFID transceiver (9,10),
the system comprising means for transmitting RFID identification data and/or an RFID transceiver identification from the RFID transceiver (9,10) to a collection module (2), the RFID transceiver (9,10) being connectible to the collection module (2) by means of a connection module (11) and by means of a telecommunication network (1), for transmitting RFID identification data and/or an RFID transceiver identification,
the collection module (2) comprising means for requesting data from tables containing RFID identification data and/or tables containing RFID transceiver identifications, as well as means for selecting a user instruction assigned to the RFID identification data and/or to the RFID transceiver identification, **characterised in**
**that** the collection module (2) includes means for controlling a telecommunication device (3), user-controllable by means of a user instruction.

11. System according to claim 10, **characterised in that** the collection module (2) is integrated into the user-controlled telecommunication device (3).

12. System according to one of the claims 10 to 11, **characterised in that** the user-controllable telecommunication device (3) includes a device for call forwarding of calls intended for a first telecommunication device (4,6,7,8) to a second telecommunication device (4,6,7,8).

13. System according to one of the claims 10 to 12, **characterised in that** the user-controllable telecommunication device (3) includes a device for selecting a user profile of a telecommunication terminal (4,6,7,8).

14. System according to one of the claims 10 to 13, **characterised in that** the user-controllable telecommunication device (3) includes a device for initiating a payment transaction.

15. System according to one of the claims 10 to 14, **characterised in that** the user-controllable telecommunication device (3) includes a device for deactivating a first SIM module of a first mobile radio terminal (4), as well as for activating a second SIM module of a second mobile radio terminal (4), and/or a device for activating an SIM module for receiving calls.

16. System according to one of the claims 10 to 15, **characterised in that** the user-controllable telecommunication device (3) includes a central unit of a fixed network, or a Home Location Register of a mobile radio network or a Visiting Location Register of a mobile radio network.

17. System according to one of the claims 10 to 16, **characterised in that** the telecommunication network (1) includes a mobile radio network and/or a fixed network and/or an Internet-based network.

18. Collection module (2) for controlling a user-controlled telecommunication device, **characterised in**
**that** the collection module (2) includes means for receiving RFID identification data and/or RFID transceiver identifications,
**that** the collection module (2) includes means for requesting data from tables containing RFID identification data and/or tables containing RFID transceiver identifications,
**that** the collection module (2) includes means for selecting a user instruction assigned to the RFID identification data and/or to an RFID transceiver identification,
**that** the collection module (2) includes means for controlling a user-controlled telecommunication device (3) by means of a user instruction.

## Revendications

1. Procédé pour l'entrée d'instructions d'utilisateurs d'un dispositif de télécommunication (3) commandable par l'utilisateur, un transpondeur RFID (12) (Radio Frequency Identification = identification par radiofréquence) étant amené dans la zone d'action d'un transcepteur RFID (9,10 )et des données d'identification RFID du transpondeur RFID (12) étant transmises au transcepteur (9,10) **caractérisé en ce que** des données d'identification RFID et/ou une identification de transcepteur RFID étant transmises par le transcepteur RFID (9, 10) à un module de saisie (2), des données d'identification RFID et/ou l'identification du transcepteur RFID étant transmises au moyen d'un module de connexion (11) reliable au transcepteur RFID (9, 10) et un réseau de télécommunication (1) par le biais du réseau de télécommunication (1) à un module de saisie (2) reliable au réseau de télécommunication (1),
au moyen du module de saisie (2) ainsi qu'au moyen de tableaux accessibles par le module de saisie, et/ou des tableaux avec des identifications de transcepteurs RFID, une instruction d'utilisateur associée étant sélectionnée avec des données, **caractérisé en ce qu'**
au moyen du module de saisie (2) le dispositif de télécommunication (3) commandé par l'utilsiateur est commandé en fonction de l'instruction d'utilisateur sélectionnée.

2. Procédé selon la revendication 1, **caractérisé en ce que** des données d'identifications RFID ainsi que l'identification du transcepteur RFID sont transmises à un module de saisie (2) intégral dans le dispositif de télécommunication commandé par l'utilisateur (3).

3. Procédé selon l'un des revendications 1 à 2, **caractérisé en ce que** l'instruction d'utilisateur se réfère à l'activation ou la désactivation de renvoi d'appels, destinés à un premier terminal de télécommunication (4, 6, 7, 8) à un second terminal de télécommunication (4, 6, 7, 8).

4. Procédé selon l'une des revendications 1 à 3, **caractérisé en ce que** l'instruction d'utilisateur se réfère à la sélection d'un profil d'utilisateur d'un terminal de télécommunication (4, 6, 7, 8).

5. Procédé selon l'une des revendications 1 à 4, **caractérisé en ce que** l'instruction d'utilisateur se réfère à un déclenchement de paiement dans un procédé de transaction de paiement.

6. Procédé selon l'une des revendications 1 à 5, **caractérisé en ce que** l'instruction d'utilisateur se réfère à la désactivation d'un premier module SIM d'un premier terminal de radiotéléphonie mobile (4) et l'activation d'un second module SIM d'un second terminal de radio téléphonie mobile (4) et/ou en ce que l'instruction d'utilisateur se réfère à l'activation d'un module SIM pour la réception d'appels.

7. Procédé selon l'une des revendications 1 à 6, **caractérisé en ce que** le dispositif de télécommunication commandé par l'utilisateur (3) se réfère à une centrale d'un réseau fixe ou à un Home Location Register (registre de localisation nominale) d'un réseau de radiotéléphonie mobile.

8. Procédé selon l'une des revendications 1 à 7, **caractérisé en ce que** le réseau de télécommunication (1) se réfère à un réseau de radiotéléphonie mobile, et/ou un réseau fixe et/ou un réseau basé sur Internet.

9. Procédé selon l'une des revendications 1 à 8, **caractérisé en ce que** le transcepteur RFID (10) est placé sur un terminal de télécommunication (8), **en ce que** des données d'identifications RFID et l'identification du transcepteur RFID sont transmises ensemble avec des données du terminal de télécommunication au module de saisie (2) et **en ce que** le module de saisie (2) sélectionne, au moyen de tableaux avec des données d'identifications RFID et des identifications de transcepteurs RFID ainsi qu'un tableau correspondant de données de terminaux de télécommunication, une instruction d'utilisateur associée. (8)

10. Système pour la saisie d'instructions d'un dispositif de télécommunication (3) commandé pat l'utilisateur, un transpondeur RFID (12) étant insérable dans la zone d'action d'un transcepteur (9,10) et des données d'identification RFID du transpondeur RFID (12) étant transmises au transpondeur (9,10),
le système comprenant des moyens pour la transmission d'identification RFID et/ou d'une identification du transcepteur RFID par le transcepteur RFID (9, 10) à un module de saisie (2), pour la transmission de données d'identifications RFID (9, 10) et/ou d'identifications d'un transpondeur RFID, le transpondeur RFID (9, 10) est reliable au moyen d'un module de connexion (11) et au moyen d'un réseau de télécommunication (1), au module de saisie (2),
le module de saisie (2) comprenant des moyens pour l'appel de données issues de tableaux avec des données d'identification RFID et/ou de tableaux avec des identifications de transcepteurs RFID ainsi que des moyens pour la sélection d'une instruction d'utilisateur associée aux données d'identification RFID et/ou à l'identification du transcepteur RFID, **caractérisé en ce que**
le module de saisie (2) comprend des moyens pour la commande d'un dispositif de télécommunication (3) commandé par une instruction d'utilisateur.

11. Système selon la revendication 10, **caractérisé en ce que** le module de saisie (2) est intégré au dispositif de télécommunication (3) commandé par l'utilisateur.

12. Système selon l'une des revendications 10 à 11, **caractérisé en ce que** le dispositif de télécommunication (3) commandé par l'utilisateur comprend un dispositif pour le renvoi d'appels destinés à un premier appareil de télécommunication (4, 6, 7, 8) à un second appareil de télécommunication (4, 6, 7, 8).

13. Système selon l'une des revendications 10 à 12, **caractérisé en ce que** le dispositif de télécommunication (3) commandé par l'utilisateur comprend un dispositif pour la sélection d'un profil d'utilisateur d'un terminal de télécommunication (4, 6, 7, 8).

14. Système selon l'une des revendications 10 à 12, **caractérisé en ce que** le dispositif de télécommunication (3) commandé par l'utilisateur comprend un dispositif pour le déclenchement d'une transaction de paiement.

15. Système selon l'une des revendications 10 à 12, **caractérisé en ce que** le dispositif de télécommunication (3) commandé par l'utilisateur comprend un dispositif pour la désactivation d'un premier module SIM d'un premier terminal de radiotéléphonie mobile (4) et l'activation d'un second module SIM d'un second terminal de radio téléphonie mobile (4) et/ou un dispositif pour l'activation d'un module SIM pour la réception d'appels.

16. Système selon l'une des revendications 10 à 16, **caractérisé en ce que** le dispositif de télécommunication (3) commandé par l'utilisateur comprend une centrale d'un réseau fixe ou à un Home Location Register (registre de localisation nominale) d'un réseau de radiotéléphonie mobile ou un Visiting Location Register (Registre de localisation de visiteurs) d'un réseau de radiotéléphonie mobile.

17. Système selon l'une des revendications 10 à 16, **caractérisé en ce que** le réseau de télécommunication (1) commandé par l'utilisateur comprend un réseau de radiotéléphonie mobile, et/ou un réseau fixe et/ou un réseau basé sur Internet.

18. Module de saisie (2) pour la commande d'un dispositif de télécommunication commandé par l'utilisateur, **caractérisé**
**en ce que** le module de saisie (2) comprend des moyens pour la réception de données d'identifications RFID et/ou d'une identification de transcepteur RFID,
**en ce que** le module de saisie (2) comprend des moyens pour l'appel de données issues de tableaux avec des données d'identification RFID et/ou de tableaux avec des identifications de transcepteurs RFID,
**en ce que** le module de saisie (2) comprend des moyens pour la sélection d'une instruction utilisateur associée aux données d'identification RFID et/ou à l'identification du transcepteur RFID,
**en ce que** le module de saisie (2) comprend des moyens pour la commande d'un dispositif de télécommunication (3) commandé par une instruction d'utilisateur.
